Europäisches Patentamt

(19) European Patent Office

Office européen des brevets

(11) Publication number: **0 177 995**
**B1**

## EUROPEAN PATENT SPECIFICATION

(12)

(45) Date of publication of the patent specification:
23.11.89

(21) Application number: **85201417.4**

(22) Date of filing: **09.09.85**

(51) Int. Cl.⁴: **A01F 29/10, A01F 29/20**

(54) Forage harvester crop processor apparatus.

(30) Priority: **12.09.84 US 650330**

(43) Date of publication of application:
**16.04.86 Bulletin 86/16**

(45) Publication of the grant of the patent:
**23.11.89 Bulletin 89/47**

(84) Designated Contracting States:
**DE FR GB**

(56) References cited:
**DE-B- 1 230 607**
**DE-C- 366 054**
**DE-C- 823 063**
**DE-C- 3 243 955**
**FR-A- 1 364 533**
**FR-A- 2 320 691**
**FR-A- 2 536 630**
**GB-A- 967 035**
**US-A- 2 843 990**
**US-A- 4 223 846**
**US-A- 4 263 772**

(73) Proprietor: **FORD NEW HOLLAND, INC. (a Delaware corp.), 500 Diller Avenue, New Holland Pennsylvania 17557(US)**

(72) Inventor: **Martenas, Wayne B., Eeckhoutstraat 2, B-8000 Brugge(BE)**

(74) Representative: **Vandenbroucke, Alberic T.J., FORD NEW HOLLAND N.V. Leon Claeysstraat 3A, B-8210 Zedelgem(BE)**

ACTORUM AG

## Description

The present invention relates generally to forage harvester crop processor apparatus and, more particularly, to forage harvester crop processors of the type having a pair of compressor rolls mounted between the cutterhead and the blower.

A forage harvester crop processor apparatus is used to receive crop material harvested from the field and chop or cut it into forage which is fed via a blower to a temporary storage bin or wagon to subsequently be fed to livestock. A common form of forage harvester utilized for this purpose employs a cylindrical type cutterhead which cooperates with a shearbar to cut crop material as it is fed over the shearbar. Although a variety of crops are cut by forage harvesters, one of the more common crops is maize, also called "corn" in North-America.

It is not uncommon while harvesting maize with a forage harvester of the type having a cylindrical cutterhead for less than half of the maize kernels to be cracked or cut during the processing. It has been learned that, when uncracked maize is subsequently fed to cattle, the cattle may not be able to utilize the full food value of the chopped maize. This is because the digestive system of cattle is such that they will not digest all of the maize kernels if the outer skin of the kernels has not been cracked or cut.

In view of the above, it has been necessary in the past to additionally process chopped maize before it is fed to cattle. One system of additionally processing chopped maize utilizes transverse cracking bars of the type disclosed in US-A 3 752 411. Other prior art systems include the use of recutter screens and hammermills. Still another system contemplates a pair of cooperating compressor rolls mounted in close proximity to the cutterhead and adapted to receive crop material and crack entrained kernels prior to conveyance to an auger such as shown in US-A 4 345 417. FR-A 2 536 630 shows a pair of cooperating compressor rolls provided in the transition area between the cylindrical cutterhead and the forage blower utilized to discharge forage from the forage harvester.

While systems in the prior art have produced satisfactory end products, there are known disadvantages, such as the inaccessibility to the processor elements for service, cleaning, inspection and the like.

It is therefore a prime objective of the instant invention to improve the accessibility to the processor elements of a forage harvester having a pair of compressor rolls between the cutterhead and the forage blower for cracking maize kernels in the cut maize crop as it is received from the cutterhead and yet to maintain a simple and compact design which therefore is less costly.

According to the invention, a forage harvester is provided having a crop processor for handling maize crops and wherein said crop processor comprises:

– a cutting mechanism including a cylindrical cutterhead with a plurality of peripherally mounted knives which are rotatable about a generally horizontal axis and pass close to a stationary shearbar for, in shearing cooperation with said shearbar, cutting crop material into small particles; the cutterhead also being operable to convey cut crop material circumferentially downwardly and rearwardly past the shearbar and to propel said cut crop material along a generally tangential path in a rearward direction as seen in the direction of operative travel of the forage harvester,

– a blower assembly disposed proximate to and rearwardly of the cylindrical cutterhead with an access opening thereof generally aligned with said generally tangential path; the cylindrical cutterhead knife path and the blower assembly defining a generally downwardly oriented wedge-shaped cavity at the transition therebetween; and

– a compressor roll assembly adapted for cracking maize kernels contained in the cut crop material; said compressor roll assembly having a pair of closely adjacent, cooperating compressor rolls positioned the one generally above the other within said cavity with one roll thereof being rotatably mounted at a fixed position on the frame and the other roll being rotatably mounted on compressor roll mounting means including a pair of brackets and resilient means; said pair of brackets supporting said other roll generally at one end thereof and being mounted generally at their other end to pivot around pivots on the frame; said resilient means being operable to urge said other roll towards said one roll to form a bite therebetween and to permit said other roll to move away from said one roll over a limited distance under influence of crop material passing therebetween and said compressor roll assembly being positioned with the bite thereof generally in alignment with said tangential path from the cutterhead to the blower assembly access opening to receive cut crop material from the cutting mechanism and to pass it on to said blower assembly.

This forage harvester further is characterized in that:

– the movably mounted roll is positioned below the fixedly mounted roll;

– the resilient means are provided between the frame and the respective brackets at locations generally below the cutterhead and the rolls and are operable to urge the lower roll in an upward direction towards the upper, fixedly mounted roll; and

– the resilient means are readily detachably mounted between the frame and the respective brackets to facilitate removal thereof to thereby permit the brackets with the lower roll thereon to pivot downwardly away from the fixedly mounted upper roll by gravity over a distance which exceeds said limited distance whereby bottom access to various processor elements is facilitated.

Accordingly, the present invention provides a forage harvester processor apparatus which has its operative components uniquely arranged in a simple, efficient and economical manner. More specifically, taking into consideration the presence of known mechanisms and other required operating components of a forage harvester apparatus, an improved combination of components is provided which cooperatively operate in a manner not heretofore known while permitting ready and convenient access to the processor elements. The present invention furthermore also contemplates a new and improved forage harvester processor apparatus in which the cutterhead, blower, and a pair of compressor rolls are uniquely mounted in relation to each other so as to provide ready access thereto and improve the overall efficiency and effectiveness of the harvester under conditions where the processor is handling maize crops.

A forage harvester crop processor apparatus embodying the present invention will now be described in greater detail by way of example with reference to the accompanying drawings, in which:

Fig. 1 is a side elevational view of a forage harvester crop processor unit.

Fig. 2 is a fragmentary elevational view taken along lines 2–2 of Fig. 1.

Fig. 3 is an enlarged side elevational view taken along lines 3–3 of Fig. 2.

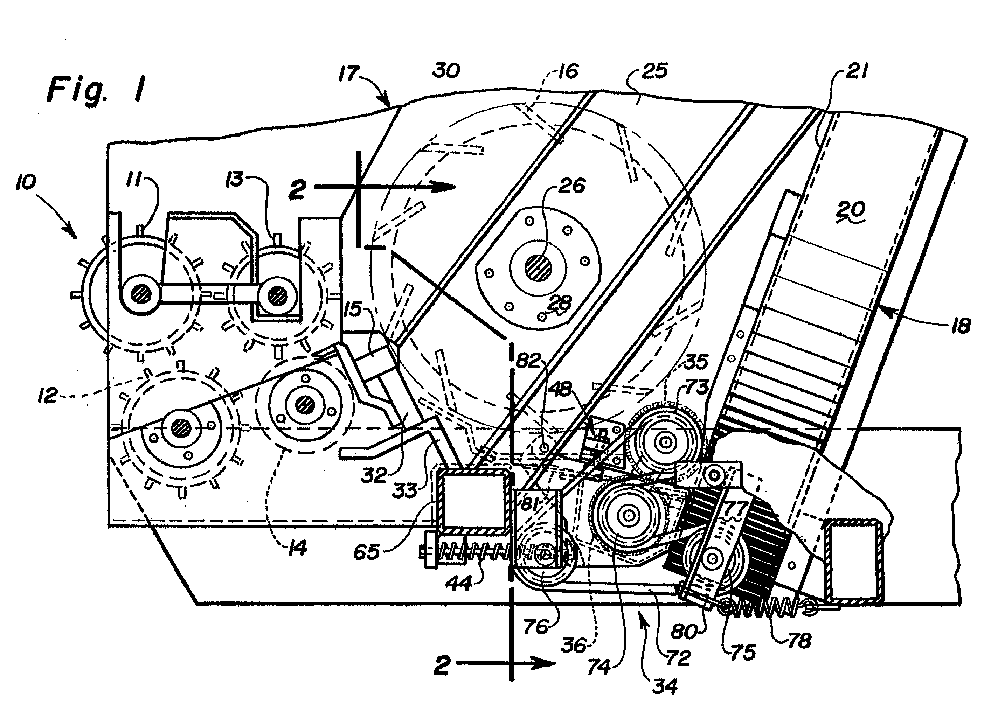

Referring now to the drawings and, more particularly to Fig. 1, a side elevational view of a precision type forage harvester processor unit can be seen. Processor units of this type are commonly embodied in forage harvesters, an example of which is shown in US-A 4 223 846. Forage harvesters are generally known and will not be described in detail for the purposes of this application, however, they commonly include a mobile frame supported by wheels and are driven by a power unit. Crop gathering headers are mounted on the frame at the forward end of forage harvesters for collecting, consolidating and conveying crop material to the infeed of the crop processors.

Now turning more particularly to the crop processor unit depicted in Fig. 1, a feed mechanism, generally designated by reference numeral 10, is shown having an upper front feed roll 11 cooperating with a lower front feed roll 12 to convey crop material rearwardly to cooperating upper and lower rear feed rolls 13, 14 respectively. The feed rolls consolidate the crop material into a mat having a generally rectangular cross section and present it across a shearbar 15 which, in turn, cooperates with a plurality of cutterhead knives 16 mounted on the periphery of a rotating cutting mechanism 17 to comminute crop material by commonly known shearing action. Although a self-propelled forage harvester has been referred to above, the type of crop processing apparatus involved can also be used in pull-type forage harvesters wherein the power is derived from a source independent of the harvester, such as a tractor.

A rotary crop discharge blower 18 is mounted rearwardly of the rotating cutting mechanism 17 and, in the embodiment shown in Fig. 1, is aligned in a plane tilted at an acute angle to the vertical. It should be realized that even though the tilted angle of the blower is an important relationship for the preferred embodiment of this invention, the invention is not limited to applications where the crop discharge means is not in a vertical plane. The crop discharge blower has a generally circular housing 20 in which a plurality of well known crop engaging paddles (not shown) are rotatably mounted. The crop engaging paddles engage crop material entering into the blower 18 via access opening 22 in the front planar wall 21 defined by upper and lower edges 23, 24, respectively. Sufficient energy is imparted to the crop material by the paddles for discharging the crop material upwardly and rearwardly through a discharge spout, not shown, to a trailing temporary storage container, such as a wagon.

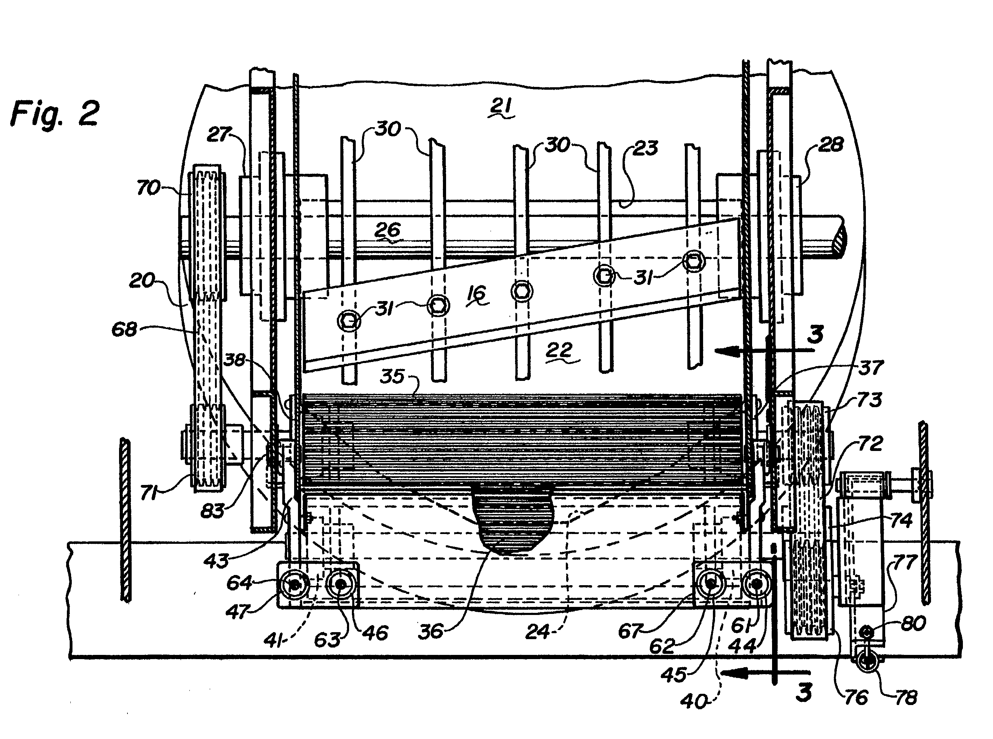

The cutting mechanism 17, mounted forwardly of and aligned with the blower 18, (see Fig. 2), includes a housing 25, in which the transverse rotating cutterhead shaft 26 is journalled for rotation in bearing assemblies 27, 28. The plurality of knives 16 (shown in phantom outline in Fig. 1), one of which is shown in Fig. 2, are mounted laterally askew on a series of side-by-side disc members 30 by means of bolts 31. The knives are peripherally disposed on the members 30 such that, upon rotation about shaft 26, the knives 16 generate a cylinder and the cutting edges pass in close proximity to shearbar 15. Thus, crop material being fed in a general mat configuration towards the cutting mechanism 17 by the feed rolls 13, 14, passes over the shearbar 15 and is cut into relatively small particles by the peripherally mounted cutterhead knives 16 in shearing engagement with shearbar 15. The shearbar 15 typically is stationarily mounted on the frame through a mounting block 32 and bracket 33. Although not shown for the purposes of this application, shearbars of this nature are commonly mounted for adjustment to permit selective movement of the shearbar towards and away from the cutterhead knives to maintain proper relative positioning for effective shearing action.

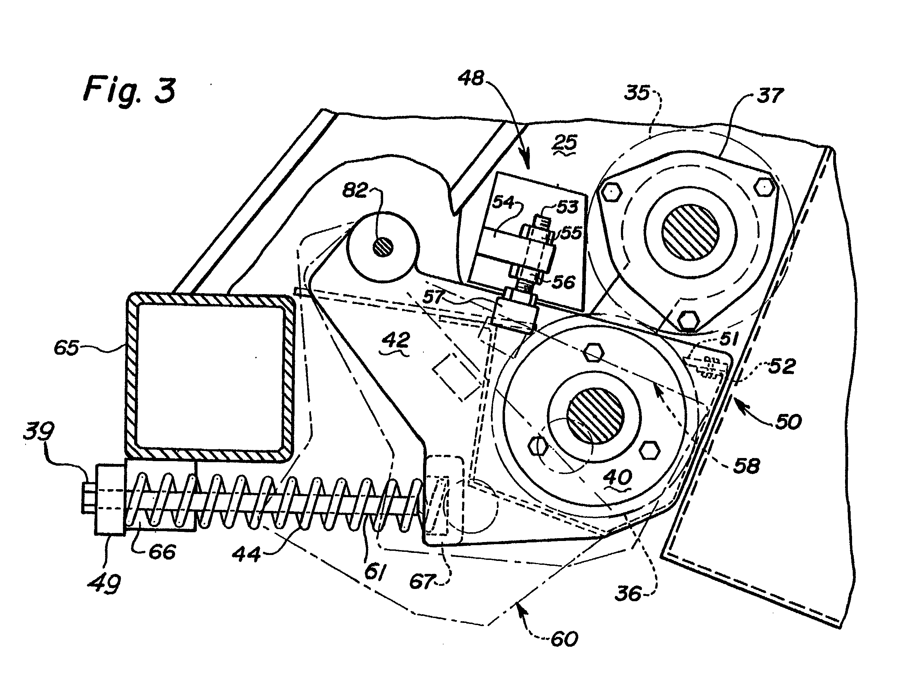

A cavity having a generally wedge-shaped configuration, is defined by the front planar wall 21 of the blower 20 and the peripheral path of the cutterhead knives 16 as they travel upwardly and rearwardly in front of the blower 20. Disposed in the cavity so formed is a compressor roll assembly 34 comprising an upper roll 35 and a lower roll 36 mounted along horizontal axes which are in a plane that is generally parallel to the face of blower 18. These rolls 35, 36 have fluted outer surfaces of the type common in roller mill applications for processing maize kernels. The upper roll 35 is rotatably mounted on the sidewalls of the housing 25 in fixed bearing assemblies 37, 38, one of which is shown in detail in Fig. 3. The lower compressor roll 36 is mounted with its outer surface adjacent, but not in contact with the upper compressor roll 35 and is journalled for rotation in bearing assemblies 40, 41, one of which is also shown in detail in Fig. 3.

The bearing assemblies 40, 41 for the lower compressor roll 36 are mounted on a pair of pivotally mounted brackets 42, 43 held in place by sets of springs 44, 45, respectively 46, 47 urging the brackets upwardly and rearwardly against adjustable stop mechanisms 48 (only one of which is shown in Figs. 2 and 3). Each adjustable stop mechanism 48 includes a bolt 53 (see Fig. 3) adjustably mounted in a support member 54 by sequentially rotatable nuts 55 and 56 for locking the bolt 53 in any desired position relative to an abutting member 57, integral with each respective bracket 42. The stop mechanisms 48 thus are operable to limit the minimal clearance between the compressor rolls 35, 36.

To prevent lateral deflection, the springs 44, 45, 46, 47 are provided around rods 61, 62, 63, 64 which fixedly are connected at one end to respective abutment members 49, which themselves firmly are coupled to flanges 66 of the frame element 65 by bolts 39. At their other ends, the rods 61, 62, 63, 64 terminate short of the collar members 67 of the respective brackets 42, 43 when the latter are in a "normal" operative position to act as stops for limiting the downward and forward movement of said brackets 42, 43 under influence of crop material passing between the compressor rolls 35, 36. The rods 61, 62, 63, 64 thus not only prevent lateral deflection of the springs 44, 45, 46, 47 but also limit the maximum clearance between the compressor rolls 35, 36 during operation. The phantom position 58 of the brackets 42 (Fig. 3) illustrates this maximum clearance position at which the lower roll 36 can be positioned with respect to the fixed upper compressor roll 35.

Also shown in Fig. 3 is a further phantom view 60 of said bracket 42 illustrating the position at which the brackets can be pivoted for moving the lower compressor roll 36 to a non-operative position. For pivoting the bracket to this lower phantom position spring 44, 45, 46, 47 must be removed from their engaged position. This is accomplished by unscrewing the bolts 39 enabling removal of the abutment members 49 together with the rods 61, 62, 63, 64 mounted thereon and of the springs 44, 45, 46, 47 extending co-axially with said rods.

Also included in the compressor roll assembly 34 is a conventional scraping means 50 consisting of a scraper blade 51 mounted adjacent the periphery of the lower compressor roll 36 by means of a mounting bracket 52.

Drive for the crop processor includes a main drive system derived from the power unit to drive the cutterhead assembly 17. The drive belt 68 trained about the sheave 70 on the driven cutterhead shaft 26 also is trained about the smaller sheave 71 on the shaft of the upper compressor roll 35. Accordingly, the upper compressor roll 35 is driven at an increased RPM and this upper compressor roll, in turn, drives the lower compressor roll via a belt 72. The belt 72 is trained about a sheave 73 on the upper compressor roll 35 to the sheave 74 on the lower compressor roll 36 and thence about idler rolls 75, 76. The idler roll 75 is mounted on a bracket 77 which is pivotally adjustable via a spring 78 and take up bolt 80 to maintain tension in the belt 72. Typical speeds for cutterheads of this type are in the range of 850 RPM by which the rollers 35, 36 are driven substantially faster, i.e., in the range of 4000 RPM.

In operation, crop material is fed to the crop processor feed mechanism 10 which in turn guides a mat of crop material across the shearbar 15 which, as noted above, cooperatively provides the shearing action with the cutterhead knives 16 to chop the crop material into small particles. The chopped crop material is then conveyed downwardly and rearwardly and propelled tangentially toward the blower generally in the direction of the compressor roll assembly 34. A lower guide pan 81 is provided along this general tangential path. As mentioned above, it is not uncommon for the compressor rolls 35, 36 to rotate four or five times the speed of the cutting mechanism 17 which aids in the effective propulsion of the crop material to the blower 18 and thereby prevents bunching at or plugging of the compressor rolls 35, 36 by cut crop material. In the event access to the blower access opening 22 or the compressor roll assembly 34 becomes necessary, the belt 72 is removed from the sheaves 73, 74 and the rolls 75, 76 by releasing the tension on the spring 78. The holding springs 44, 45, 46, 47 together with the abutment members 49 and the rods 61, 62, 63, 64 thereon then are removed by unscrewing the bolts 39 whereafter the brackets 42, 43 pivot downwardly by gravity to the phantom position 60, shown in Fig. 3. This permits ready access to the blower fan blades for inspection or adjustment as required. It also permits inspection and cleaning of compressor rolls 35, 36.

If it becomes necessary to completely remove the lower compressor roll assembly, pins 82 and 83, about which the brackets 42 and 43 pivot, are slidably removed and the entire assembly can then be removed for inspection, repair, adjustment or the like. Operation of the processor 34 quickly and efficiently can be resumed by merely returning the brackets 42, 43 to the pivotal position via the pins 82, 83 and by pivoting said brackets 42, 43 upwardly toward the stop members 48 at which point, the springs 44, 45, 46, 47 together with the abutment members 49 and the rods 61, 62, 63, 64 are returned to their holding positions, the belt 72 is rethreaded about the sheaves 73, 74 and the rolls 75, 76 and the spring 78 returns the tension to the system by adjusting the bolt 80.

Alternatively, if the compressor assembly 34 is not required in instances where maize cracking is not necessary, then the entire lower compressor roll assembly can be left off the machine and a modified guide plate can be inserted at the lower portion of the wedge-shaped cavity, i.e., between the frame member 65 and the lower portion of the access opening 22 in the blower 18. An example of a crop transfer means of this type which would readily accommodate this purpose is shown and described in US-A 4 263 772 .

While the preferred structure, in which the principles of the present invention have been incorporated, is shown and described above, it is to be understood that the invention is not to be limited to the particular details, as shown and described above, but that, in fact, widely different means may be employed in the practice of the broader aspects of the claims.

## Claims

1. A forage harvester having a crop processor for handling maize crops; the crop processor comprising:

- a cutting mechanism (17) including a cylindrical cutterhead with a plurality of peripherally mounted knives (16) which are rotatable about a generally horizontal axis (26) and pass close to a stationary shearbar (15) for, in shearing cooperation with said shearbar (15), cutting crop material into small particles; the cutterhead also being operable to convey cut crop material circumferentially downwardly and rearwardly past the shearbar (15) and to propel said cut crop material along a generally tangential path in a rearward direction as seen in the direction of operative travel of the forage harvester,

- a blower assembly (18) disposed proximate to and rearwardly of the cylindrical cutterhead with an access opening (22) thereof generally aligned with said generally tangential path; the cylindrical cutterhead knife path and the blower assembly (18) defining a generally downwardly oriented wedge-shaped cavity at the transition therebetween; and

- a compressor roll assembly (34) adapted for cracking maize kernels contained in the cut crop material; said compressor roll assembly (34) having a pair of closely adjacent, cooperating compressor rolls (35, 36) positioned the one generally above the other within said cavity with one roll (35) thereof being rotatably mounted at a fixed position on the frame (25) and the other roll (36) being rotatably mounted on compressor roll mounting means including a pair of brackets (42, 43) and resilient means (44–47); said pair of brackets (42, 43) supporting said other roll (36) generally at one end thereof and being mounted generally at their other end to pivot around pivots (82, 83) on the frame (25); said resilient means (44–47) being operable to urge said other roll (36) towards said one roll (35) to form a bite therebetween and to permit said other roll (36) to move away from said one roll (35) over a limited distance under influence of crop material passing therebetween and said compressor roll assembly (34) being positioned with the bite thereof generally in alignment with said tangential path from the cutterhead to the blower assembly access opening (22) to receive cut crop material from the cutting mechanism (17) and to pass it on to said blower assembly (18) and characterized in that:

- the movably mounted roll (36) is positioned below the fixedly mounted roll (35)

- the resilient means (44–47) are provided between the frame (25) and the respective brackets (42, 43) at locations generally below the cutterhead and the rolls (35, 36) and are operable to urge the lower roll (36) in an upward direction towards the upper, fixedly mounted roll (35); and

- the resilient means (44–47) are readily detachably mounted between the frame (25) and the respective brackets (42, 43) to facilitate removal thereof to thereby permit the brackets (42, 43) with the lower roll (36) thereon to pivot downwardly away from the fixedly mounted upper roll (35) by gravity over a distance which exceeds said limited distance whereby bottom access to various processor elements is facilitated.

2. A forage harvester according to claim 1 characterized in that:

- the blower assembly (18) comprises a housing (20) including a generally upright front face with the blower access opening (22) therein;

- the compressor rolls (35, 36), when in the operative position, are situated adjacent to said front face in a plane extending substantially parallel thereto; and

- the pivotal mounting (82, 83) of the lower compressor roll (36) on the frame (25) is positioned forwardly of the bite of the compressor roll assembly (34) whereby, upon removal of the resilient means (44–47), the lower compressor roll (36) swings away by gravity from both the upper compressor roll (35) and the blower assembly (18) so as to thereby permit easy bottom access to the compressor rolls (35, 36), the blower access opening (22) and the cutterhead.

3. A forage harvester according to claim 2 characterized in that the generally upright front face of the blower assembly (18) comprises a planar wall portion (21) having the access opening (22) therein through which crop material is conveyed; said planar wall portion (21) being inclined upwardly and rearwardly relative to said rotatable cutterhead and the compressor rolls (35, 36) being mounted in a plane substantially parallel to said planar wall portion (21).

4. A forage harvester according to any of the preceding claims characterized in that the resilient means (44–47) extend between frame members (65, 66) and collar members (67) on the brackets (42, 43) in a manner to urge said brackets (42, 43) with the lower compressor roll (36) thereon upwardly around said pivots (82, 83) towards the upper compressor roll (35) and towards engagement with stop means (48) on the frame (25); said stop means (48) being operable to limit the minimal clearance between the upper and lower compressor rolls (35, 36).

5. A forage harvester according to claim 4 characterized in that:

- the resilient means (44–47) are in the form of compression coil springs extending between the brackets (42, 43) supporting the lower compressor roll (36) and abutment means (49) readily detachably connected to the frame members (65, 66); and

- the compressor roll mounting means supporting the lower compressor roll (36) further also comprise rods (61–64) fixedly coupled at one end to the abutment means (49) and extending coaxially with the coil springs (44–47) to prevent deflection of said coil springs (44–47) during operation.

6. A forage harvester according to claim 5 characterized in that at least one of said rods (61–64) has a free end positioned to form a stop for a respective bracket (42, 43) to limit the maximum clearance between the upper and lower compressor rolls (35, 36) and thereby also limit the maximum compression of the coil springs (44–47).

7. A forage harvester according to claim 5 or 6, characterized in that the abutment means (49) with the rods (61–64) connected thereto are readily detachable from the frame (25) as unitary structures to facilitate said removal of said resilient means (44–47) and said rods (61–64).

8. A forage harvester according to any of the preceding claims, characterized in that said pivots (82, 83) include a pair of slidably removable pins about which said pair of brackets (42, 43) pivot; said pins being readily removable to detach said brackets (42, 43) and the lower compressor roll (36) rotatably mounted thereon as a unit from the crop processor.

9. A forage harvester according to claim 8, characterized in that a guide plate is inserted beneath the upper compressor roll (35) at the lower portion of the wedge-shaped cavity at the transition between the cylindrical cutterhead knife path and the access opening (22) in the blower assembly (18) in the condition where the lower compressor roll (36) has been removed.

**Patentansprüche**

1. Feldhäcksler mit einer Erntegutaufbereitungseinrichtung zur Verarbeitung von Mais-Erntegut, wobei die Erntegutaufbereitungseinrichtung folgende Teile umfaßt:
– einen Schneidmechanismus (17) mit einem zylindrischen Schneidkopf mit einer Vielzahl von am Umfang befestigten Messern (16), die um eine allgemein horizontale Achse (26) drehbar sind und mit geringem Abstand an einer stationären Gegenschneide (15) vorbeilaufen, um unter scherender Zusammenwirkung mit der Gegenschneide (15) Erntematerial in kleine Teilchen zu zerschneiden, wobei der Schneidkopf weiterhin derart betätigbar ist, daß er geschnittenes Erntematerial in Umfangsrichtung nach unten und nach hinten an der Gegenschneide (15) vorbei befördert und das geschnittene Erntematerial entlang eines allgemein tangentialen Weges in einer Rückwärtsrichtung bei Betrachtung in Richtung der Betriebsbewegung des Feldhäckslers antreibt,
– eine Gebläsebaugruppe (18), die nahegelegen zu und hinter dem zylindrischen Schneidkopf angeordnet ist, wobei eine Einlaßöffnung (22) der Gebläsebaugruppe allgemein mit dem allgemein tangentialen Weg ausgerichtet ist und wobei die Bewegungsbahn der Messer des zylindrischen Messerkopfes und die Gebläsebaugruppe (18) einen allgemein nach unten gerichteten keilförmigen Hohlraum am Übergangsbereich zwischen diesen Teilen umgrenzen, und
– eine Quetschwalzenbaugruppe (34), die zum Zerquetschen von in dem geschnittenen Erntematerial enthaltenen Maiskernen ausgebildet ist, wobei die Quetschwalzenbaugruppe (34) zwei eng benachbarte zusammenwirkende Quetschwalzen (35, 36) aufweist, von denen die eine allgemein über der anderen in dem Hohlraum angeordnet ist und eine dieser Walzen (35) drehbar an einer festen Position an dem Rahmen (25) befestigt ist, während die andere Walze (36) drehbar auf Quetschwalzen-Befestigungseinrichtungen befestigt ist, die zwei Haltearme (42, 43) und elastische Einrichtungen (44–47) einschließen, wobei weiterhin die beiden Haltearme (42, 43) die andere Walze (36) allgemein an einem ihrer Enden haltern und allgemein an ihren anderen Ende derart befestigt sind, daß sie um Schwenkbefestigungen (82, 83) auf dem Rahmen (25) verschwenken, während die elastischen Einrichtungen (44–47) derart betätigbar sind, daß sie die andere Walze (36) in Richtung auf die eine Walze (35) pressen, um einen Preßspalt zwischen diesen Walzen zu bilden und um eine Fortbewegung der anderen Walze (36) von der einen Walze (35) über eine begrenzte Strecke unter dem Einfluß von Erntematerial ermöglichen, das zwischen den Walzen hindurchläuft, und wobei die Quetschwalzenbaugruppe (34) so angeordnet ist, daß ihr Preßspalt allgemein mit dem tangentialen Weg von dem Schneidkopf zur Gebläsebaugruppen-Einlaßöffnung (22) ausgerichtet ist, um geschnittenes Erntematerial von dem Schneidmechanismus (17) zu empfangen und es zur Gebläsebaugruppe (18) weiterzuleiten,
dadurch gekennzeichnet, daß
– die beweglich befestigte Walze (36) unterhalb der fest befestigten Walze (35) angeordnet ist,
– die elastischen Einrichtungen (44–47) zwischen dem Rahmen (25) und den jeweiligen Haltearmen (42, 43) an Positionen allgemein unterhalb des Schneidkopfes und der Walzen (35, 36) angeordnet und derart betätigbar sind, daß sie die untere Walze (36) in einer nach oben gerichteten Richtung auf die obere, fest befestigte Walze (35) anpressen, und
– die elastischen Einrichtungen (44–47) leicht lösbar zwischen dem Rahmen (25) und den jeweiligen Haltearmen (42, 43) befestigt sind, um ihre Entfernung zu erleichtern, so daß die Haltearme (42, 43) mit der daran befestigten unteren Walze (36) nach unten hin und von der fest befestigten oberen Walze (35) unter der Wirkung der Schwerkraft über eine Strecke verschwenkbar sind, die die begrenzte Strecke übersteigt, so daß der Zugang von unten an die verschiedenen Elemente der Aufbereitungseinrichtung erleichtert wird.

2. Feldhäcksler nach Anspruch 1, dadurch gekennzeichnet, daß
– die Gebläsebaugruppe (18) ein Gehäuse (20) umfaßt, das eine allgemein aufrechte Vorderfläche einschließt, in der die Gebläse-Einlaßöffnung (22) ausgebildet ist,
– die Quetschwalzen (35, 36) in der Betriebsstellung benachbart zu der Vorderfläche in einer Ebene gelegen sind, die sich allgemein parallel zu dieser Vorderfläche erstreckt, und
– die Schwenkbefestigung (82, 83) der unteren Quetschwalze (36) auf dem Rahmen (25) vor dem Preßspalt der Quetschwalzenbaugruppe (34) angeordnet ist, so daß nach einer Entfernung der elastischen Einrichtungen (44–47) die untere Quetschwalze (36) unter der Wirkung der Schwerkraft sowohl von der oberen Quetschwalze (35) als auch von der Gebläsebaugruppe (18) fort verschwenkt, sodaß ein einfacher Zugang von unten an die Quetschwalzen (35, 36), die Gebläse-Einlaßöffnung (22) und den Schneidkopf ermöglicht wird.

3. Feldhäcksler nach Anspruch 2, dadurch gekennzeichnet, daß die allgemein aufrechte Vorderfläche der Gebläseanordnung (18) einen ebenen Wandteil (21) umfaßt, in dem die Einlaßöffnung (22) ausgebildet ist, durch die das Erntematerial gefördert wird, daß der ebene Wandteil (21) nach oben und nach hinten gegenüber dem drehbaren Schneidkopf geneigt ist, und daß die Quetschwalzen (35, 36) in einer Ebene im wesentlichen parallel zu dem ebenen Wandteil (21) befestigt sind.

4. Feldhäcksler nach einem der vorhergehenden Ansprüche, dadurch gekennzeichnet, daß sich die elastischen Einrichtungen (44–47) zwischen Rahmenteilen (65, 66) und Hülsenteilen (67) an den Haltearmen (42, 43) derart erstrecken, daß die Haltearme (42, 43) mit der daran befestigten unteren Quetschwalze nach oben um die Schwenkbefestigungen (82, 83) in Richtung auf die obere Quetschwalze (35) und in Richtung auf einen Eingriff mit Anschlagteilen (48) auf dem Rahmen (25) gedrückt werden, und daß die Anschlagteile (48) zur Begrenzung des minimalen Abstandes zwischen den oberen und unteren Quetschwalzen (35, 36) betätigbar sind.

5. Feldhäcksler nach Anspruch 4, dadurch gekennzeichnet,
— daß die elastischen Einrichtungen (44–47) die Form von Kompressions-Schraubenfedern aufweisen, die sich zwischen den die untere Quetschwalze (36) halternden Haltearmen (42, 43) und Anschlageinrichtungen (49) erstrecken, die leicht lösbar mit den Rahmenteilen (65, 66) verbunden sind, und
— die Quetschwalzen-Befestigungeinrichtungen, die die untere Quetschwalze (36) haltern, weiterhin Stangen (61, 64) umfassen, die mit einem Ende fest mit den Anschlageinrichtungen (49) verbunden sind und sich koaxial zu den Schraubenfedern (44–47) erstrecken, um eine Auslenkung der Schraubenfedern (44–47) während des Betriebs zu verhindern.

6. Feldhäcksler nach Anspruch 5, dadurch gekennzeichnet, daß zumindestens eine der Stangen (61–64) ein freies Ende aufweist, das derart angeordnet ist, daß es einen Anschlag für einen jeweiligen Haltearm (42, 43) bildet, um den maximalen Abstand zwischen den oberen und unteren Quetschwalzen (35, 36) und damit auch die maximale Zusammendrückung der Schraubenfedern (44–47) zu begrenzen.

7. Feldhäcksler nach Anspruch 5 oder 6, dadurch gekennzeichnet, daß die Anschlageinrichtungen (49) mit den damit verbundenen Stangen (61–64) als einstückige Anordnung von dem Rahmen (25) leicht lösbar ausgebildet sind, um die Entfernung der elastischen Einrichtungen (44–47) und der Stangen (61–64) zu erleichtern.

8. Feldhäcksler nach einem der vorhergehenden Ansprüche, dadurch gekennzeichnet, daß die Schwenkbefestigungen (82, 83) zwei durch Verschieben entfernbare Zapfen einschließen, um die die beiden Haltearme (42, 43) verschwenkbar sind, und daß die Zapfen leicht entfernbar sind, um die Haltearme (42, 43) und die daran drehbar befestigte untere Quetschwalze (36) als eine Einheit von der Erntegutaufbereitungseinrichtung zu trennen.

9. Feldhäcksler nach Anspruch 8, dadurch gekennzeichnet, daß eine Führungsplatte unterhalb der oberen Quetschwalze (35) an dem unteren Teil des keilförmigen Hohlraumes am Übergang zwischen der Bewegungsbahn der Messer des zylindrischen Schneidkopfes und der Einlaßöffnung (22) der Gebläsebaugruppe (18) in dem Fall eingefügt wird, wenn die untere Quetschwalze (36) entfernt wurde.

**Revendications**

1. Récolteuse-hacheuse de fourrage équipée d'un dispositif de traitement de récolte pour traiter des récoltes de maïs, le dispositif de traitement de récolte comportant:
— un mécanisme de coupe (17) comprenant un organe de coupe cylindrique muni de plusieurs couteaux (16) montés d'une manière périphérique, qui sont aptes à tourner autour d'un axe dans l'ensemble horizontal (26) et passent près d'une barre de cisaillement fixe (15) pour, en coopération de cisaillement avec ladite barre de cisaillement (15), couper des produits de récolte en petites particules; l'organe de coupe étant également apte à opérer pour acheminer des produits de récolte coupés circonférentiellement vers le bas et vers l'arrière au-delà de la barre de cisaillement (15) et pour propulser lesdits produits de récolte coupés le long d'une trajectoire dans l'ensemble tangentielle dans une direction orientée vers l'arrière, lorsqu'on la considère dans la direction d'avancement fonctionnel de la récolteuse-hacheuse de fourrage,
— un ensemble ventilateur (18) disposé à proximité et à l'arrière de l'organe de coupe cylindrique, dont un orifice d'accès (22) est d'une manière générale aligné avec ladite trajectoire dans l'ensemble tangentielle; la trajectoire des couteaux de l'organe de coupe cylindrique et l'ensemble ventilateur (18) définissant, au niveau de leur jonction intermédiaire, une cavité cunéiforme orientée d'une manière générale vers le bas; et
— un ensemble de rouleaux compresseurs (34) adapté pour concasser des grains de maïs contenus dans les produits de récolte coupés; ledit ensemble de rouleaux compresseurs (34) comportant deux rouleaux compresseurs coopérants (35, 36) étroitement rapprochés et d'une manière générale superposés l'un à l'autre à l'intérieur de ladite cavité, dont le premier (35) est monté mobile en rotation au niveau d'un point fixe prévu sur le châssis (25), tandis que le second (36) est monté mobile en rotation sur des moyens de montage de rouleau compresseur comprenant deux pattes (42, 43) et des moyens élastiques (44–47); lesdites deux pattes (42, 43) supportant, dans l'ensemble au niveau de l'une de leurs extrémités, ledit second rouleau (36), et étant, dans l'ensemble au niveau de leur autre extrémité, montées pour pivoter autour de pivots (82, 83) prévus sur le châssis (25), tandis que lesdits moyens élastiques (44–47) sont aptes à opérer pour solliciter ledit second rouleau (36) en direction dudit premier rouleau (35), en vue d'établir entre eux un pincement et de permettre audit second rouleau (36) de s'écarter dudit premier rouleau (35) sur une distance limitée, sous l'influence du passage de produits de récolte entre eux, et ledit ensemble de rouleaux compresseurs (34) étant positionné de façon que son pincement soit, d'une manière générale, en alignement avec ladite trajectoire tangentielle qui va de l'organe de coupe à l'orifice d'accès (22) de l'ensemble ventilateur, pour recevoir les produits de récolte coupés provenant du mécanisme de coupe (17) et pour les transférer audit ensemble ventilateur (18), et caractérisée en ce que:

— le rouleau monté mobile (36) est positionné au-dessous du rouleau monté fixe (35);

— les moyens élastiques (44–47) sont prévus entre le châssis (25) et les pattes (42, 43) respectives, en des point situés, d'une manière générale, au-dessous de l'organe de coupe et des rouleaux (35, 36), et sont aptes à opérer pour solliciter le rouleau inférieur (36) dans une direction ascendante, vers le rouleau supérieur monté fixe (35); et

— les moyens élastiques (44–47) sont montés d'une manière aisément détachable entre le châssis (25) et les pattes (42, 43) respectives afin de faciliter leur démontage, pour qu'ainsi les pattes (42, 43) qui portent sur elles le rouleau inférieur (36), puissent pivoter vers le bas en s'écartant du rouleau supérieur monté fixe (35), par gravité sur une distance supérieure à ladite distance limitée, moyennant quoi un accès par le bas aux différents éléments du dispositif de traitement est facilité.

2. Récolteuse-hacheuse de fourrage selon la revendication 1, caractérisée en ce que:

— l'ensemble ventilateur (18) comporte un logement (20) comprenant une face avant dans l'ensemble verticale qui comporte en elle l'orifice d'accès (22) du ventilateur;

— les rouleaux compresseurs (35, 36) sont, lorsqu'ils occupent la position active, situés à proximité de ladite face avant, dans un plan qui s'étend sensiblement parallèlement à celle-ci; et

— le montage pivotant (82, 83) du rouleau compresseur inférieur (36) sur le châssis (25) est positionné à l'avant du pincement de l'ensemble de rouleaux compresseurs (34) moyennant quoi, lors du démontage des moyens élastiques (44–47), le rouleau compresseur inférieur (36) pivote par gravité en s'écartant à la fois du rouleau compresseur supérieur (35) et de l'ensemble ventilateur (18), pour ainsi permettre un accès facile par le bas aux rouleaux compresseurs (35, 36), à l'orifice d'accès (22) du ventilateur et à l'organe de coupe.

3. Récolteuse-hacheuse de fourrage selon la revendication 2, caractérisée en ce que la face avant dans l'ensemble verticale de l'ensemble ventilateur (18) comprend une partie de paroi plane (21) comportant en elle l'orifice d'accès (22) à travers lequel les produits de récolte sont acheminés; ladite partie de paroi plane (21) étant inclinée vers le haut et vers l'arrière par rapport audit organe de coupe rotatif, tandis que les rouleaux compresseurs (35, 36) sont montés dans un plan sensiblement parallèle à ladite partie de paroi plane (21).

4. Récolteuse-hacheuse de fourrage selon l'une quelconque des revendications précédentes, caractérisée en ce que les moyens élastiques (44–47) s'étendent entre des éléments d'armature (65, 66) et des éléments formant colliers (67) prévus sur les pattes (42, 43), de manière à solliciter lesdites pattes (42, 43) qui portent sur elles le rouleau compresseur inférieur (36), vers le haut autour desdits pivots (82, 83) en direction du rouleau compresseur supérieur (35) et en vue d'un contact avec des moyens d'arrêt (48) prévus sur le châssis (25); lesdits moyens d'arrêt (48) étant aptes à opérer pour limiter l'écartement minimal entre les rouleaux compresseurs supérieur et inférieur (35, 36).

5. Récolteuse-hacheuse de fourrage selon la revendication 4, caractérisée en ce que:

— les moyens élastiques (44–47) se présentent sous la forme de ressorts à boudin de compression qui s'étendent entre les pattes (42, 43) supportant le rouleau compresseur inférieur (36) et des moyens formant butées (49) rattachés d'une manière aisément détachable aux éléments d'armature (65, 66); et

— les moyens de montage de rouleau compresseur supportant le rouleau compresseur inférieur (36) comportent, en outre, des tiges (61–64) accouplées d'une manière fixe, au niveau de l'une de leurs extrémités, avec les moyens formant butées (49) et s'étendant coaxialement avec les ressorts à boudin (44–47) pour empêcher une déformation desdits ressorts à boudin (44–47) en cours de fonctionnement.

6. Récolteuse-hacheuse de fourrage selon la revendication 5, caractérisée en ce que l'une au moins desdites tiges (61–64) possède une extrémité libre positionnée de façon à définir un arrêt pour une patte (42, 43) correspondante, afin de limiter l'écartement maximal entre les rouleaux compresseurs supérieur et inférieur (35, 36) et, par conséquent, également la compression maximale des ressorts à boudin (44–47).

7. Récolteuse-hacheuse de fourrage selon la revendication 5 ou 6, caractérisée en ce que les moyens formant butées (49) qui ont les tiges (61–64) accouplées avec eux, sont aisément détachables du châssis (25) sous la forme de structures unitaires, afin de faciliter ledit démontage desdits moyens élastiques (44–47) et desdites tiges (61–64).

8. Récolteuse-hacheuse de fourrage selon l'une quelconque des revendications précédentes, caractérisée en ce que lesdits pivots (82, 83) comportent deux broches démontables par coulissement autour desquelles pivotent lesdites deux pattes (42, 43); lesdites broches étant aisément démontables pour détacher d'un seul bloc du dispositif de traitement de récolte lesdites pattes (42, 43) et le rouleau compresseur inférieur (36) monté rotatif sur celles-ci.

9. Récolteuse-hacheuse de fourrage selon la revendication 8, caractérisée en ce que, dans l'état dans lequel le rouleau compresseur inférieur (36) a été démonté, une plaque de guidage est insérée sous le rouleau compresseur supérieur (35) au niveau de la partie inférieure de la cavité cunéiforme, à la jonction entre la trajectoire des couteaux de l'organe de coupe cylindrique et de l'orifice d'accès (22) prévu dans l'ensemble ventilateur (18).

Fig. 1

EP 0 177 995 B1

Fig. 2

EP 0 177 995 B1

Fig. 3